(19) Europäisches Patentamt
European Patent Office
Office européen des brevets

(11) **EP 3 065 460 B1**

(12) **EUROPEAN PATENT SPECIFICATION**

(45) Date of publication and mention
of the grant of the patent:
**11.09.2019 Bulletin 2019/37**

(21) Application number: **14865455.1**

(22) Date of filing: **26.11.2014**

(51) Int Cl.:
*H04W 36/00* (2009.01)     *H04B 7/06* (2006.01)
*H04B 7/04* (2017.01)

(86) International application number:
**PCT/CN2014/092278**

(87) International publication number:
**WO 2015/078375 (04.06.2015 Gazette 2015/22)**

(54) **METHOD AND DEVICE FOR SWITCHING TRANSMISSION MODE**

VERFAHREN UND VORRICHTUNG ZUM UMSCHALTEN DES ÜBERGANGSMODUS

PROCÉDÉ ET DISPOSITIF DE COMMUTATION DE MODE DE TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2013 CN 201310608605**

(43) Date of publication of application:
**07.09.2016 Bulletin 2016/36**

(73) Proprietor: **Huawei Technologies Co., Ltd.
Longgang District
Shenzhen, Guangdong 518129 (CN)**

(72) Inventors:
• **HU, Wenquan
  Shenzhen
  Guangdong 518129 (CN)**
• **ZHAO, Weijie
  Shenzhen
  Guangdong 518129 (CN)**
• **HUA, Meng
  Shenzhen
  Guangdong 518129 (CN)**

(74) Representative: **Gill Jennings & Every LLP
The Broadgate Tower
20 Primrose Street
London EC2A 2ES (GB)**

(56) References cited:
EP-A2- 2 918 091          WO-A1-2015/033321
WO-A2-2014/074055     CN-A- 102 113 385
CN-A- 103 313 320        US-A1- 2012 082 047
US-A1- 2013 190 000

• ERICSSON ET AL: "Link Level Simulation Results
for Combined Cell Deployment", 3GPP DRAFT;
R1-133646 LINK LEVEL SIMULATION RESULTS
FOR COMBINED CELL DEPLOYMENT, 3RD
GENERATION PARTNERSHIP PROJECT (3GPP),
MOBILE COMPETENCE CENTRE ; 650, ROUTE
DES LUCIOLES ; F-06921 SOPHIA-ANTIPOL , vol.
RAN WG1, no. Barcelona, Spain; 20130819 -
20130823 10 August 2013 (2013-08-10),
XP050716734, Retrieved from the Internet:
URL:http://www.3gpp.org/ftp/tsg_ran/WG1_RL
1/TSGR1_74/Docs/ [retrieved on 2013-08-10]
• ERICSSON ET AL: "Mobility and Node Selection
in Combined Cell Deployment for Heterogeneous
Networks", 3GPP DRAFT; R2-132620 MOBILITY
AND NODE SELECTION IN COMBINED CELL
DEPLOYMENT FOR HETEROGENEOUS
NETWORKS, 3RD GENERATION PARTNERSHIP
PROJECT (3GPP), MOBILE COMPETENCE
CENTRE ; 650, ROUTE DES LUCIOLES , vol. RAN
WG2, no. Barcelona, Spain; 20130819 - 20130823
10 August 2013 (2013-08-10), XP050718440,
Retrieved from the Internet:
URL:http://www.3gpp.org/ftp/tsg_ran/WG2_RL
2/TSGR2_83/Docs/ [retrieved on 2013-08-10]

**Description**

**TECHNICAL FIELD**

Embodiments of the present invention relate to a communications technology, and in particular, to a transmission mode switching method and a device.

**BACKGROUND**

In a universal mobile telecommunications system (Universal Mobile Telecommunications System, UMTS for short), a combined cell is a logical cell to which cells corresponding to multiple coverage areas belong. When user equipment (User Equipment, UE for short) moves in the different coverage areas, higher layer signaling exchange does not occur, and transceiver nodes in the combined cell send a primary common pilot channel by using a same scrambling code.

The combined cell generally includes a high power node (High Power Node, HPN for short) and a low power node (Low Power Node, LPN for short), and the nodes are connected to a central processor of the nodes by using low latency links. According to different locations of the UE, there are three transmission modes in the combined cell: Mode (Mode) 1 is node selection, mode 2 is beamforming, and mode 3 is multiplexing. mode 1 is applicable to a scenario in which a strength of a received downlink signal of a node is much greater than a strength of a received signal of another node, and mode 2 and mode 3 are applicable to a scenario in which received downlink signals of different nodes are of about a same strength.

In different scenarios, the central processor needs to determine which mode should be used in the combined cell to send downlink data for the UE. In the prior art, during mode switching, resource reconfiguration needs to be completed by using higher layer signaling. Much signaling is exchanged in the switching process, leading to a relatively long switching latency.

Publication titled, "Link Level Simulation Results for Combined Cell Deployment", R1-133646, 3GPP TSG RAN WG1 Meeting #74 relates to link level simulation for node selection with spatial reuse transmission mode in a combined cell deployment.

Publication titled, "Mobility and Node Selection in Combined Cell Deployment for Heterogeneous Networks" R2-132620, 3GPP TSG RAN WG2 Meeting #83 relates to mobility and node selection in combined cell deployment for heterogeneous networks.

WO 2015/033321 relates to distributed node operation in a combined cell deployment of a heterogeneous cellular communications network.

**SUMMARY**

Embodiments of the present invention provide a transmission mode switching method and a device to reduce latency in downlink transmission mode switching.

Various aspects of the present disclosure have been defined in the independent claims. Further technical features of each of these aspects have been defined in the respective dependent claims.

In the transmission mode switching method and the device provided in the embodiments of the present invention, UE monitors pilot signals sent by at least two nodes, where the pilot signals sent by the different nodes are different, and the pilot signals are used for differentiating the at least two nodes; and the UE sends a physical layer measurement result report to a base station (NodeB) if the UE determines, according to the detected pilot signals, that measurement results of the pilot signals of the at least two nodes meet a preset trigger condition, so that the NodeB performs downlink transmission mode switching. In this way, a latency for downlink transmission mode switching is reduced.

**BRIEF DESCRIPTION OF DRAWINGS**

To describe the technical solutions in the embodiments of the present invention or in the prior art more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.

FIG. 1 is a flowchart of Embodiment 1 of a transmission mode switching method according to the present invention;
FIG. 2 is a flowchart of Embodiment 2 of a transmission mode switching method according to the present invention;
FIG. 3 is a schematic structural diagram of an embodiment of UE according to the present invention; and
FIG. 4 is a schematic structural diagram of an embodiment of a NodeB according to the present invention.

## DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

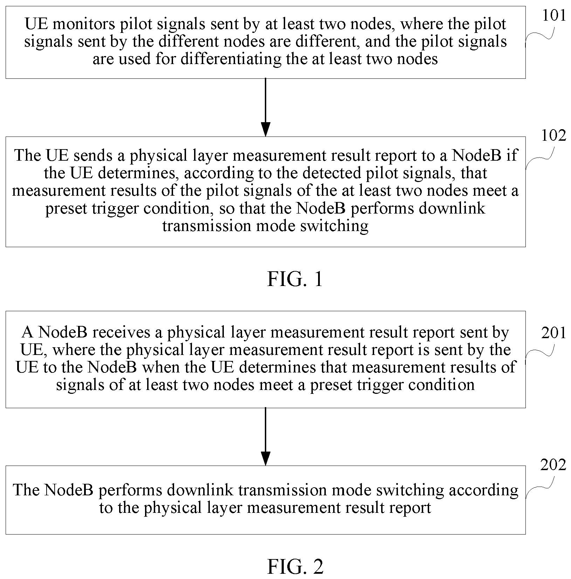

FIG. 1 is a flowchart of Embodiment 1 of a transmission mode switching method according to the present invention. As shown in FIG. 1, the method provided in this embodiment may be specifically executed by user equipment, and the method provided in this embodiment may specifically include:

Step 101: The UE monitors pilot signals sent by at least two nodes, where the pilot signals sent by the different nodes are different, and the pilot signals are used for differentiating the at least two nodes.

Specifically, the at least two nodes send the pilot signals in at least one of the following manners: different timeslots, different scrambling codes, and different channelization codes. For example, different nodes may construct different pilot signals by using different timeslots, or may construct different pilot signals by using different scrambling codes, or may construct different pilot signals by using different channelization codes, or may use any combination of the foregoing manners, which is not limited in this embodiment.

Step 102: The UE sends a physical layer measurement result report to a NodeB if the UE determines, according to the detected pilot signals, that measurement results of the pilot signals of the at least two nodes meet a preset trigger condition, so that the NodeB performs downlink transmission mode switching.

It should be noted that the preset trigger condition may be: the UE detects that a parameter value of the pilot signals sent by the at least two nodes falls within a preset threshold range; or the preset trigger condition may be: the UE detects that a parameter value of the pilot signals sent by the at least two nodes falls beyond a preset threshold range. The parameter value of the pilot signals is any one of the following: a strength difference of the pilot signals, a channel quality difference, and a path gain difference, which is not limited in this embodiment.

For example, if the UE detects that a strength difference between a strength of a downlink pilot signal of an LPN and a strength of a downlink pilot signal of an HPN falls within or falls beyond a preset threshold range [-3 dB, 3 dB], the UE triggers reporting physical layer measurement results, that is, sends the physical layer measurement result report to the NodeB. Optionally, the physical layer measurement result report includes at least one of the following information: information about a channel quality indicator (Channel Quality Indicator, CQI for short), information about a path gain (Path Gain), information about a ratio of a chip power to a noise power (Ec/No), and information about a received signal code power (Received Signal Code Power, RSCP for short), which is not limited in this embodiment.

In actual application, further, if the UE uses a closed loop transmit diversity (Closed Loop Transmit Diversity, CLTD for short) in mode 2, after the UE sends the physical layer measurement result report to the NodeB, the UE may further receive a mode switching indication that is sent by the NodeB by using a downlink high speed-shared control channel (High Speed-Shared Control Channel, HS-SCCH for short), where the mode switching indication includes information about a downlink transmission mode. Optionally, the mode switching indication may further include information about a node that sends downlink data.

It should be noted that if a receiver capability of the UE is supporting only mode 1 and mode 2, and in mode 2, the UE uses an open loop transmit diversity (Open Loop Transmit Diversity, OLTD for short), in this case, the UE does not need to know which transmission mode is used on a network side, and therefore the NodeB does not need to send the mode switching indication to the UE.

In the technical solution in this embodiment, UE monitors pilot signals sent by at least two nodes, where the pilot signals sent by the different nodes are different, and the pilot signals are used for differentiating the at least two nodes; and the UE sends a physical layer measurement result report to a NodeB if the UE determines, according to the detected pilot signals, that measurement results of the pilot signals of the at least two nodes meet a preset trigger condition, so that the NodeB performs downlink transmission mode switching. In this way, a latency for downlink transmission mode switching is reduced.

FIG. 2 is a flowchart of Embodiment 2 of a transmission mode switching method according to the present invention. As shown in FIG. 2, the method provided in this embodiment may be specifically executed by a NodeB, and the method provided in this embodiment may specifically include:

Step 201: The NodeB receives a physical layer measurement result report sent by UE, where the physical layer measurement result report is sent by the UE to the NodeB when the UE determines that measurement results of signals of at least two nodes meet a preset trigger condition.

In this step, the physical layer measurement result report includes at least one of the following information: information about a channel quality indicator, information about a path gain, information about Ec/No, and information about a received signal code power.

Step 202: The NodeB performs downlink transmission mode switching according to the physical layer measurement result report.

In actual application, if the UE uses a CLTD in mode 2, after the NodeB performs downlink transmission mode switching, the NodeB further needs to send a mode switching indication to the UE by using an HS-SCCH, where the mode switching indication is used for indicating to the UE that downlink transmission enters a different transmission mode, and the mode switching indication includes information about a downlink transmission mode. Optionally, the mode switching indication may further include information about a node that sends downlink data.

In the technical solution in this embodiment, a NodeB receives a physical layer measurement result report sent by user equipment UE, where the physical layer measurement result report is sent by the UE to the NodeB when the UE determines that measurement results of signals of at least two nodes meet a preset trigger condition; and the NodeB performs downlink transmission mode switching according to the physical layer measurement result report. In this way, a latency for downlink transmission mode switching is reduced.

In the method for transmission mode switching provided in this embodiment, a process of performing downlink transmission mode switching is:

The UE continuously monitors pilot signals sent by different nodes. To differentiate different nodes, the nodes need to use different pilot signals, for example, construct different pilot signals by using different timeslots, and/or construct different pilot signals by using different scrambling codes, and/or construct different pilot signals by using different channelization codes to implement differentiation. Specifically, by monitoring pilot signals sent by different nodes, the UE may obtain measurement results shown in Table 1.

**Table 1 Measurement result**

| Identification of node | Measurement result |
|---|---|
| 0 | RSCP0(Ec/No, Path Gain, CQI) |
| 1 | RSCP1(Ec/No, Path Gain, CQI) |
| 2 | RSCP2(Ec/No, Path Gain, CQI) |
| 3 | RSCP3(Ec/No, Path Gain, CQI) |

When the UE detects that a parameter value of the pilot signals falls within or falls beyond a preset threshold range, for example, a strength difference between a strength of a downlink pilot signal of an LPN received by the UE and a strength of a downlink pilot signal of an HPN received by the UE falls within or falls beyond [-3 dB, 3 dB], the UE triggers reporting physical layer measurement results, that is, the UE sends the physical layer measurement result report to the NodeB. Optionally, the physical layer measurement result report may include information about a CQI, and/or information about a path gain, and/or information about an Ec/No, and/or information about an RSCP, which is not limited in this embodiment.

After the NodeB receives the physical layer measurement result report, the NodeB may determines, according to information in the physical layer measurement result report, whether a downlink transmission mode is switched to mode 2 or mode 3. To avoid a ping-pong effect, a hysteresis mechanism may be further introduced.

That the information about the RSCP is included in the physical layer measurement result report is used as an example. Assuming that an initial transmission mode of the UE is mode 1, a determining criterion for determining whether the downlink transmission mode is switched to mode 2 or mode 3 is as follows:

a condition for switching to mode 2 or mode 3 from mode 1 is: at least one monitored node satisfies a first inequality:

|a measured value of an RSCP of the monitored node - an RSCP value of a current node| $\leq$ 3 - H1, where H1 is a first hysteresis parameter; and

a condition for switching to mode 1 from mode 2 or mode 3 is: at least one monitored node satisfies a second inequality:
|a measured value of an RSCP of a currently selected first node - an RSCP value of a currently selected second node| $\geq$ 3 + H2, where H2 is a second hysteresis parameter.

It should be noted that H1 and H2 may be equal or unequal, which is not limited in this embodiment.

The NodeB may send a mode switching indication by using an HS-SCCH according to a transmission mode supported by the UE. If a receiver capability of the UE is supporting only mode 1 and mode 2, and the UE uses an OLTD in mode 2, when the NodeB performs downlink transmission mode switching, the NodeB does not need to send the mode switching indication to the UE. If the UE uses a closed loop transmit diversity (Closed Loop Transmit Diversity, CLTD for short) in mode 2, when the NodeB performs downlink transmission mode switching, the NodeB needs to send the mode switching indication to the UE.

If a receiver capability of the UE is supporting mode 1, mode 2 and mode 3, when the NodeB sends the mode switching indication to the UE, the mode switching indication not only needs to include information about a downlink transmission mode, but also needs to include information about a node that sends downlink data, that is, indicates, to the UE, the NodeB uses which nodes to send the downlink data to the UE, to facilitate correct reception by the UE.

Assuming that measurement results reported by the UE include measurement results of four nodes at most, and when downlink data transmission is implemented, at most two nodes can simultaneously send data to the UE, in mode 3, $C_4^2 = 6$ different combinations of nodes sending downlink data need to be indicated, and at least three bits (bits) are required to indicate the transmission mode.

For example, in a scenario in which a receiver capability of the UE is supporting all of mode 1, mode 2 and mode 3, a mapping relationship between a bit mode used by the mode switching indication and a downlink transmission mode is shown in Table 2 and Table 3:

**Table 2 UE uses OLTD in mode 2**

| Bit mode | Downlink transmission mode |
|----------|----------------------------|
| 000 | mode 1, mode 2 |
| XXX | mode 3 + Node X + Node Y |

The three bits 000 are used for indicating to the UE that the downlink transmission mode is to be switched to mode 1 or mode 2. Any three bits except 000 are used for indicating to the UE that the downlink transmission mode is to be switched to mode 3, and indicates to the UE that the NodeB will use the node X and the node Y to send downlink data, to facilitate correct reception by the UE.

**Table 3 UE uses CLTD in mode 2**

| Bit mode | Downlink transmission mode |
|----------|----------------------------|
| 0000 | mode 1 |
| XXX | mode 2 + Node X + Node Y |
| YYYY | mode 3 + Node X + Node Y |

The four bits 0000 are used for indicating to the UE that the downlink transmission mode is to be switched to mode 1. The four bits XXXX are used for indicating to the UE that the downlink transmission mode is to be switched to mode 2, and indicates to the UE that the NodeB will use the node X and the node Y to send downlink data to the UE. The four bits YYYY are used for indicating to the UE that the downlink transmission mode is to be switched to mode 3, and indicates to the UE that the NodeB will use the node X and the node Y to send downlink data to the UE, to facilitate correct reception by the UE.

In a scenario in which a receiver capability of the UE is supporting only mode 1 and mode 2, a mapping relationship between a bit mode used by the mode switching indication and a downlink transmission mode is shown in Table 4:

**Table 4 UE uses CLTD in mode 2**

| Bit mode | Downlink transmission mode |
|----------|----------------------------|
| 000 | mode 1 |
| XXX | mode 2 + Node X + Node Y |

The three bits 000 are used for indicating to the UE that the downlink transmission mode is to be switched to mode 1. The three bits XXX except 000 are used for indicating to the UE that the downlink transmission mode is to be switched to mode 2, and indicates to the UE that the NodeB will use the node X and the node Y to send downlink data to the UE.

In the technical solution in this embodiment, UE can trigger a process for downlink transmission mode switching, and mode switching can be completed without higher layer signaling exchange, thereby reducing a latency for downlink transmission mode switching.

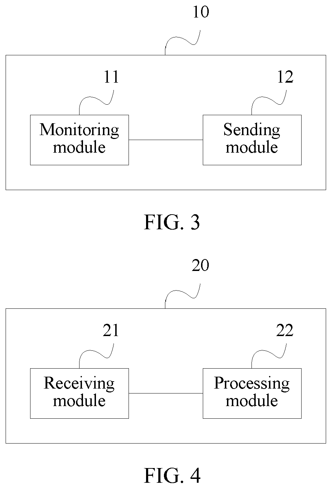

FIG. 3 is a schematic structural diagram of Embodiment 1 of UE according to the present invention. As shown in FIG. 3, the UE 10 provided in this embodiment may specifically include a monitoring module 11 and a sending module 12, where

the monitoring module 11 may be configured to monitor pilot signals sent by at least two nodes, where the pilot signals sent by the different nodes are different, and the pilot signals are used for differentiating the at least two nodes; and the sending module 12 may be configured to send a physical layer measurement result report to a NodeB if the UE determines, according to the detected pilot signals, that measurement results of the pilot signals of the at least two nodes meet a preset trigger condition, so that the NodeB performs downlink transmission mode switching.

Further, the UE 10 may further include a receiving module, configured to receive a mode switching indication that is sent by the NodeB by using an HS-SCCH, where the mode switching indication includes information about a downlink transmission mode. Optionally, the mode switching indication further includes information about a node that sends downlink data.

Specifically, the preset trigger condition may be: the UE detects that a parameter value of the pilot signals sent by the at least two nodes falls within a preset threshold range; or the UE detects that a parameter value of the pilot signals sent by the at least two nodes falls beyond a preset threshold range.

The parameter value of the pilot signals is any one of the following: a strength difference of the pilot signals, a channel quality difference, and a path gain difference. The at least two nodes send the pilot signals in at least one of the following manners: different timeslots, different scrambling codes, and different channelization codes. The physical layer measurement result report includes at least one of the following information: information about a channel quality indicator, information about a path gain, information about Ec/No, and information about a received signal code power. No limitation is set thereto in this embodiment.

The UE in this embodiment can be configured to execute the technical solution in the foregoing method embodiments, and the implementation principles and technical effects thereof are similar, which are not described in detail herein again.

FIG. 4 is a schematic structural diagram of an embodiment of a NodeB according to the present invention. As shown in FIG. 4, the NodeB 20 provided in this embodiment may specifically include a receiving module 21 and a processing module 22, where

the receiving module 21 may be configured to receive a physical layer measurement result report sent by user equipment UE, where the physical layer measurement result report is sent by the UE to the NodeB when the UE determines that measurement results of signals of at least two nodes meet a preset trigger condition; and

the processing module 22 may be configured to perform downlink transmission mode switching according to the physical layer measurement result report.

Further, the NodeB 20 may further include a sending module, configured to send a mode switching indication by using an HS-SCCH, where the mode switching indication is used for indicating to the UE that downlink transmission enters a different transmission mode; and the mode switching indication includes information about a downlink transmission mode. Optionally, the mode switching indication further includes information about a node that sends downlink data.

Specifically, the physical layer measurement result report includes at least one of the following information: information about a channel quality indicator, information about a path gain, information about Ec/No, and information about a received signal code power, which is not limited in this embodiment.

The NodeB in this embodiment can be configured to execute the technical solution in the foregoing method embodiments, and the implementation principles and technical effects thereof are similar, which are not described in detail herein again.

In the several embodiments provided in the present invention, it should be understood that the disclosed apparatus and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

It may be clearly understood by persons skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments without departing from the scope of the technical solutions of the embodiments of the present invention.

**Claims**

1. A transmission mode switching method for transmission mode switching in a combined cell, comprising:

   monitoring (101), by user equipment, UE, pilot signals sent by at least two nodes, wherein the pilot signals sent by the different nodes are different, and the pilot signals are used for differentiating the at least two nodes; and sending (102), by the UE, a physical layer measurement result report to a base station, NodeB, if the UE determines, according to the detected pilot signals, that measurement results of the pilot signals of the at least two nodes meet a preset trigger condition, so that the NodeB performs downlink transmission mode switching, wherein the preset trigger condition is: the UE detects that a parameter value of the pilot signals sent by the at least two nodes falls within a preset threshold range; or the UE detects that a parameter value of the pilot signals sent by the at least two nodes falls beyond a preset threshold range; wherein the parameter value of the pilot signals is any one of the following: a strength difference of the pilot signals, a channel quality difference, and a path gain difference.

2. The method according to claim 1, wherein after the sending, by the UE, a physical layer measurement result report to a NodeB if the UE determines, according to the detected pilot signals, that measurement results of the pilot signals of the at least two nodes meet a preset trigger condition, the method further comprises:
   receiving, by the UE, a mode switching indication that is sent by the NodeB by using a downlink high speed-shared control channel, HS-SCCH, wherein the mode switching indication comprises information about a downlink transmission mode.

3. The method according to claim 2, wherein the mode switching indication further comprises information about a node that sends downlink data.

4. The method according to any one of claims 1 to 3, wherein the at least two nodes send the pilot signals in at least one of the following manners: different timeslots, different scrambling codes, and different channelization codes.

5. The method according to claim 1, wherein the physical layer measurement result report comprises at least one of the following information: information about a channel quality indicator, information about a path gain, the received energy per chip divided by the power density in the band, Ec/No, and information about a received signal code power.

6. The method according to any one of claims 1 to 5 further comprising:

   receiving (201), by the base station, NodeB, the physical layer measurement result report sent by user equipment, UE, wherein the physical layer measurement result report is sent by the UE to the NodeB when the UE determines that measurement results of signals of at least two nodes meet the preset trigger condition; and performing (202), by the NodeB, downlink transmission mode switching according to the physical layer measurement result report.

**7.** The method according to claim 6, wherein after the performing, by the NodeB, downlink transmission mode switching according to the physical layer measurement result report, the method further comprises:

sending, by the NodeB, a mode switching indication to the UE by using the downlink high speed-shared control channel, HS-SCCH, wherein the mode switching indication is used for indicating to the UE that downlink transmission enters a different transmission mode; and the mode switching indication comprises information about a downlink transmission mode.

**8.** User equipment, UE, configured for enabling transmission mode switching in a combined cell, comprising:

a monitoring module (11), configured to monitor pilot signals sent by at least two nodes, wherein the pilot signals sent by the different nodes are different, and the pilot signals are used for differentiating the at least two nodes; and a sending module (12), configured to send a physical layer measurement result report to a base station, NodeB, if the UE determines, according to the detected pilot signals, that measurement results of the pilot signals of the at least two nodes meet a preset trigger condition, so that the NodeB performs downlink transmission mode switching;

wherein the preset trigger condition is: the UE detects that a parameter value of the pilot signals sent by the at least two nodes falls within a preset threshold range; or the UE detects that a parameter value of the pilot signals sent by the at least two nodes falls beyond a preset threshold range; wherein the parameter value of the pilot signals is any one of the following: a strength difference of the pilot signals, a channel quality difference, and a path gain difference.

**9.** The UE according to claim 8, wherein the UE further comprises a receiving module, configured to receive a mode switching indication that is sent by the NodeB by using a downlink high speed-shared control channel, HS-SCCH, wherein the mode switching indication comprises information about a downlink transmission mode.

**10.** A system comprising a user equipment, UE, and a base station, NodeB, configured for enabling transmission mode switching in a combined cell, wherein the UE is according to claim 8 or 9, and wherein, the base station comprises:

a receiving module (21), configured to receive a physical layer measurement result report sent by the UE, wherein the physical layer measurement result report is sent by the UE to the NodeB when the UE determines that measurement results of signals of at least two nodes meet a preset trigger condition; and a processing module (22), configured to perform downlink transmission mode switching according to the physical layer measurement result report;

wherein the preset trigger condition is: the UE detects that a parameter value of the pilot signals sent by the at least two nodes falls within a preset threshold range; or the UE detects that a parameter value of the pilot signals sent by the at least two nodes falls beyond a preset threshold range; wherein the parameter value of the pilot signals is any one of the following: a strength difference of the pilot signals, a channel quality difference, and a path gain difference.

**11.** The system according to claim 10, wherein the base station further comprises a sending module, configured to send a mode switching indication to the UE by using a downlink high speed-shared control channel, HS-SCCH, wherein the mode switching indication is used for indicating to the UE that downlink transmission enters a different transmission mode; and the mode switching indication comprises information about a downlink transmission mode.

**Patentansprüche**

**1.** Übergangsmodusumschaltverfahren zum Umschalten des Übergangsmodus in einer kombinierten Zelle, umfassend:

Überwachen (101) von Pilotsignalen, die von mindestens zwei Knoten gesendet werden, durch eine Benutzereinrichtung (User Equipment, UE), wobei die Pilotsignale, die von den verschiedenen Knoten gesendet werden, unterschiedlich sind, und die Pilotsignale zum Unterscheiden der mindestens zwei Knoten verwendet werden; und Senden (102) eines physikalischen Schichtmessergebnisberichts durch die UE an einen Basisstation-Node B, wenn die UE gemäß den erfassten Pilotsignalen bestimmt, dass Messergebnisse der Pilotsignale der mindestens zwei Knoten eine voreingestellte Triggerbedingung erfüllen, so dass der Node B ein Downlink-Übergangsmodusumschalten durchführt,

wobei die voreingestellte Triggerbedingung ist: die UE erfasst, dass ein Parameterwert der Pilotsignale, die von den mindestens zwei Knoten gesendet sind, in einen voreingestellten Schwellenbereich fällt; oder die UE erfasst, dass ein Parameterwert der Pilotsignale, die von den mindestens zwei Knoten gesendet sind, außerhalb eines voreingestellten Schwellenbereich fällt; wobei der Parameterwert der Pilotsignale eines von Folgendem ist: eine Stärkedifferenz der Pilotsignale, eine Kanalqualitätsdifferenz und eine Pfadverstärkungsdifferenz.

2. Verfahren nach Anspruch 1, wobei nach dem Senden eines physikalischen Schichtmessergebnisberichts durch die UE an einen Node B, wenn die UE gemäß den erfassten Pilotsignalen bestimmt, dass Messergebnisse der Pilotsignale der mindestens zwei Knoten eine voreingestellte Triggerbedingung erfüllen, das Verfahren ferner umfasst: Empfangen einer Modusumschaltanzeige durch die UE, die durch den Node B unter Verwendung eines gemeinsamen Downlink-Hochgeschwindigkeitssteuerkanals (High Speed-Shared Control Channel, HS-SCCH) gesendet wird, wobei die Modusumschaltanzeige Informationen über einen Downlink-Übergangsmodus umfasst.

3. Verfahren nach Anspruch 2, wobei die Modusumschaltanzeige ferner Informationen über einen Knoten umfasst, der Downlink-Daten sendet.

4. Verfahren nach einem der Ansprüche 1 bis 3, wobei die mindestens zwei Knoten die Pilotsignale auf mindestens eine der folgenden Arten senden: verschiedene Zeitschlitze, verschiedene Verschlüsselungscodes und verschiedene Kanalisierungscodes.

5. Verfahren nach Anspruch 1, wobei der physikalische Schichtmessergebnisbericht mindestens eine der folgenden Informationen umfasst: Informationen über einen Kanalqualitätsindikator, Informationen über eine Pfadverstärkung, die empfangene Energie pro Chip geteilt durch die Leistungsdichte in dem Band, Ec/No, und Informationen über eine empfangene Signalcodeleistung.

6. Verfahren nach einem der Ansprüche 1 bis 5, ferner umfassend:

Empfangen (201) des von einer Benutzervorrichtung (UE) gesendeten physikalischen Schichtmessergebnisberichts durch den Basisstation-Node B, wobei der physikalische Schichtmessergebnisbericht durch die UE an den Node B gesendet wird, wenn die UE bestimmt, dass die Messergebnisse von Signalen von mindestens zwei Knoten die voreingestellte Triggerbedingung erfüllen; und
Durchführen (202) eines Downlink-Übergangsmodusumschaltens durch den Node B gemäß dem physikalischen Schichtmessergebnisbericht.

7. Verfahren nach Anspruch 6, wobei nach dem Durchführen des Downlink-Übergangsmodusumschaltens durch den Node B gemäß dem physikalischen Schichtmessergebnisbericht das Verfahren ferner umfasst:
Senden einer Modusumschaltanzeige durch den Node B an die UE unter Verwendung des gemeinsamen Downlink-Hochgeschwindigkeitssteuerkanals (HS-SCCH), wobei die Modusumschaltanzeige verwendet wird, um der UE anzuzeigen, dass ein Downlink-Übergang in einen anderen Übergangsmodus eintritt; und die Modusumschaltanzeige Informationen über einen Downlink-Übergangsmodus umfasst.

8. Benutzereinrichtung (UE), die konfiguriert ist, um ein Übergangsmodusumschalten in einer kombinierten Zelle zu ermöglichen, umfassend:

ein Überwachungsmodul (11), das konfiguriert ist, um Pilotsignale zu überwachen, die von mindestens zwei Knoten gesendet werden, wobei die Pilotsignale, die von den verschiedenen Knoten gesendet werden, unterschiedlich sind, und die Pilotsignale zum Unterscheiden der mindestens zwei Knoten verwendet werden; und
ein Sendemodul (12), das konfiguriert ist, um einen physikalischen Schichtmessergebnisbericht an einen Basisstation-Node B, zu senden, wenn die UE gemäß den erfassten Pilotsignalen bestimmt, dass Messergebnisse der Pilotsignale der mindestens zwei Knoten eine voreingestellte Triggerbedingung erfüllen, so dass der Node B ein Downlink-Übergangsmodusumschalten durchführt;
wobei die voreingestellte Triggerbedingung ist: die UE erfasst, dass ein Parameterwert der Pilotsignale, die von den mindestens zwei Knoten gesendet sind, in einen voreingestellten Schwellenbereich fällt; oder die UE erfasst, dass ein Parameterwert der Pilotsignale, die von den mindestens zwei Knoten gesendet sind, außerhalb eines voreingestellten Schwellenbereich fällt; wobei der Parameterwert der Pilotsignale eines von Folgendem ist: eine Stärkedifferenz der Pilotsignale, eine Kanalqualitätsdifferenz und eine Pfadverstärkungsdifferenz.

9. UE nach Anspruch 8, wobei die UE ferner ein Empfangsmodul umfasst, das konfiguriert ist, um eine Modusumschaltanzeige zu empfangen, die durch den Node B unter Verwendung eines gemeinsamen Downlink-Hochgeschwindigkeitssteuerkanals (HS-SCCH) gesendet wird, wobei die Modusumschaltanzeige Informationen über einen Downlink-Übergangsmodus umfasst.

10. System, umfassend eine Benutzereinrichtung (UE), und einen Basisstation-Node B, die konfiguriert sind, um ein Übergangsmodusumschalten in einer kombinierten Zelle zu ermöglichen, wobei die UE gemäß Anspruch 8 oder 9 ausgelegt ist, und wobei die Basisstation umfasst:

ein Empfangsmodul (21), das konfiguriert ist, um einen durch die UE gesendeten physikalischen Schichtmessergebnisbericht zu empfangen, wobei der physikalische Schichtmessergebnisbericht durch die UE an den Node B gesendet wird, wenn die UE bestimmt, dass Messergebnisse von Signalen von mindestens zwei Knoten eine voreingestellte Triggerbedingung erfüllen; und

ein Verarbeitungsmodul (22), das konfiguriert ist, um ein Downlink-Übergangsmodusumschalten gemäß dem physikalischen Schichtmessergebnisbericht durchzuführen;

wobei die voreingestellte Triggerbedingung ist: die UE erfasst, dass ein Parameterwert der Pilotsignale, die von den mindestens zwei Knoten gesendet sind, in einen voreingestellten Schwellenbereich fällt; oder die UE erfasst, dass ein Parameterwert der Pilotsignale, die von den mindestens zwei Knoten gesendet sind, außerhalb eines voreingestellten Schwellenbereich fällt; wobei der Parameterwert der Pilotsignale eines von Folgendem ist: eine Stärkedifferenz der Pilotsignale, eine Kanalqualitätsdifferenz und eine Pfadverstärkungsdifferenz.

11. System nach Anspruch 10, wobei die Basisstation ferner ein Sendemodul umfasst, das konfiguriert ist, um unter Verwendung eines gemeinsamen Downlink-Hochgeschwindigkeitssteuerkanals (HS-SCCH) eine Modusumschaltanzeige an die UE zu senden, wobei die Modusumschaltanzeige verwendet wird, um der UE anzuzeigen, dass ein Downlink-Übergang in einen anderen Übergangsmodus eintritt; und die Modusumschaltanzeige Informationen über einen Downlink-Übergangsmodus umfasst.

**Revendications**

1. Procédé de commutation du mode de transmission pour la commutation du mode de transmission dans une cellule combinée, comprenant les étapes consistant à :

surveiller (101), par l'équipement utilisateur, UE (user equipment), les signaux pilotes envoyés par au moins deux noeuds, dans lequel les signaux pilotes envoyés par les différents noeuds sont différents et les signaux pilotes sont utilisés pour différencier les au moins deux noeuds ; et

envoyer (102), par l'UE, un compte-rendu sur le résultat de la mesure d'une couche physique à une station de base ou noeud B, si l'UE détermine, en fonction des signaux pilotes détectés, que les résultats de la mesure des signaux pilotes des au moins deux noeuds respectent une condition de déclenchement prédéfinie, de sorte que le noeud B effectue la commutation du mode de transmission en liaison descendante,

dans lequel la condition de déclenchement prédéfinie est la suivante : l'UE détecte qu'une valeur de paramètre des signaux pilotes envoyés par les au moins deux noeuds tombe dans une plage de seuil prédéfinie ; ou l'UE détecte qu'une valeur de paramètre des signaux pilotes envoyés par les au moins deux noeuds tombe au-delà d'une plage de seuil prédéfinie ; dans lequel la valeur de paramètre des signaux pilotes est l'une quelconque parmi les suivantes : une différence d'intensité des signaux pilotes, une différence de qualité de canal et une différence de gain de chemin.

2. Procédé selon la revendication 1, dans lequel après l'envoi par l'UE, d'un compte-rendu sur le résultat de la mesure de couche physique à un noeud B, si l'UE détermine, en fonction des signaux pilotes détectés, que les résultats de mesure des signaux pilotes des au moins deux noeuds respectent une condition de déclenchement prédéfinie, le procédé comprend en outre l'étape consistant à :
recevoir, par l'UE, une indication de commutation du mode envoyée par le noeud B en utilisant un canal de commande partagé à haut débit en liaison descendante, HS-SCCH (high speed-shared control channel), dans lequel l'indication de commutation du mode comprend des informations sur un mode de transmission en liaison descendante.

3. Procédé selon la revendication 2, dans lequel l'indication de commutation du mode comprend en outre des informations sur un noeud qui envoie des données en liaison descendante.

4. Procédé selon l'une quelconque des revendications 1 à 3, dans lequel les au moins deux noeuds envoient les signaux pilotes de l'une au moins des manières suivantes : différents intervalles de temps, différents codes de brouillage et différents codes de canalisation.

5. Procédé selon la revendication 1, dans lequel le compte-rendu sur le résultat de la mesure de la couche physique comprend au moins l'une des informations suivantes : des informations sur un indicateur de qualité de canal, des informations sur un gain de chemin, l'énergie reçue par composant, divisée par la densité de puissance dans la bande, Ec/No, et des informations sur une puissance de code du signal reçu.

6. Procédé selon l'une quelconque des revendications 1 à 5, comprenant en outre les étapes consistant à :

recevoir (201), par la station de base, ou noeud B, le compte-rendu sur le résultat de la mesure de la couche physique envoyé par l'équipement utilisateur, UE, dans lequel le compte-rendu sur le résultat de la mesure de la couche physique est envoyé par l'UE au noeud B lorsque l'UE détermine que les résultats de mesure de signaux d'au moins deux noeuds respectent la condition de déclenchement prédéfinie ; et

effectuer (202), par le noeud B, une commutation du mode de transmission en liaison descendante conformément au compte-rendu sur le résultat de la mesure de la couche physique.

7. Procédé selon la revendication 6, dans lequel, après la réalisation, par le noeud B, d'une commutation du mode de transmission en liaison descendante conformément au compte-rendu sur le résultat de la mesure de la couche physique, le procédé comprend en outre l'étape consistant à :

envoyer, par le noeud B, une indication de commutation du mode à l'UE en utilisant le canal de commande partagé à haut débit en liaison descendante, HS-SCCH, dans lequel l'indication de commutation du mode est utilisée pour indiquer à l'UE que la transmission en liaison descendante passe à un mode de transmission différent ; et

l'indication de commutation du mode comprend des informations sur un mode de transmission en liaison descendante.

8. Équipement utilisateur, UE, configuré pour permettre la commutation du mode de transmission dans une cellule combinée, comprenant :

un module de surveillance (11), configuré pour surveiller les signaux pilotes envoyés par au moins deux noeuds, dans lequel les signaux pilotes envoyés par les différents noeuds sont différents et les signaux pilotes sont utilisés pour différencier les au moins deux noeuds ; et

un module d'émission (12), configuré pour envoyer un compte-rendu sur le résultat de la mesure d'une couche physique à une station de base, ou noeud B, si l'UE détermine, en fonction des signaux pilotes détectés, que les résultats de la mesure des signaux pilotes des au moins deux noeuds respectent une condition de déclenchement prédéfinie, de sorte que le noeud B effectue la commutation du mode de transmission en liaison descendante ;

dans lequel la condition de déclenchement prédéfinie est la suivante : l'UE détecte qu'une valeur de paramètre des signaux pilotes envoyés par les au moins deux noeuds tombe dans une plage de seuil prédéfinie ; ou l'UE détecte qu'une valeur de paramètre des signaux pilotes envoyés par les au moins deux noeuds tombe au-delà d'une plage de seuil prédéfinie ; dans lequel la valeur de paramètre des signaux pilotes est l'une quelconque parmi les suivantes : une différence d'intensité des signaux pilotes, une différence de qualité de canal et une différence de gain de chemin.

9. Équipement utilisateur selon la revendication 8, dans lequel l'UE comprend en outre un module de réception, configuré pour recevoir une indication de commutation du mode envoyée par le noeud B en utilisant un canal de commande partagé à haut débit en liaison descendante, HS-SCCH, dans lequel l'indication de commutation du mode comprend des informations sur un mode de transmission en liaison descendante.

10. Système comprenant un équipement utilisateur, UE, et une station de base, ou noeud B, configuré pour permettre la commutation du mode de transmission dans une cellule combinée, dans lequel l'UE est conforme aux revendications 8 ou 9, et dans lequel la station de base comprend :

un module de réception (21), configuré pour recevoir un compte-rendu sur le résultat de la mesure de la couche physique envoyé par l'UE, dans lequel le compte-rendu sur le résultat de la mesure de la couche physique est envoyé par l'UE au noeud B lorsque l'UE détermine que les résultats de la mesure de signaux d'au moins deux noeuds satisfont à une condition de déclenchement prédéfinie ; et

un module de traitement (22), configuré pour effectuer une commutation du mode de transmission en liaison descendante conformément au compte-rendu sur le résultat de la mesure de la couche physique ;

dans lequel la condition de déclenchement prédéfinie est la suivante : l'UE détecte qu'une valeur de paramètre des signaux pilotes envoyés par les au moins deux noeuds tombe dans une plage de seuil prédéfinie ; ou l'UE détecte qu'une valeur de paramètre des signaux pilotes envoyés par les au moins deux noeuds tombe au-delà d'une plage de seuil prédéfinie ; dans lequel la valeur de paramètre des signaux pilotes est l'une quelconque parmi les suivantes : une différence d'intensité des signaux pilotes, une différence de qualité de canal et une différence de gain de chemin.

11. Système selon la revendication 10, dans lequel la station de base comprend en outre un module d'émission configuré pour envoyer une indication de commutation du mode à l'UE en utilisant un canal de commande partagé à haut débit en liaison descendante, HS-SCCH, dans lequel l'indication de commutation du mode est utilisée pour indiquer à l'UE que la transmission en liaison descendante passe à un mode de transmission différent ; et l'indication de commutation du mode comprend des informations sur un mode de transmission en liaison descendante.

UE monitors pilot signals sent by at least two nodes, where the pilot signals sent by the different nodes are different, and the pilot signals are used for differentiating the at least two nodes — 101

The UE sends a physical layer measurement result report to a NodeB if the UE determines, according to the detected pilot signals, that measurement results of the pilot signals of the at least two nodes meet a preset trigger condition, so that the NodeB performs downlink transmission mode switching — 102

FIG. 1

A NodeB receives a physical layer measurement result report sent by UE, where the physical layer measurement result report is sent by the UE to the NodeB when the UE determines that measurement results of signals of at least two nodes meet a preset trigger condition — 201

The NodeB performs downlink transmission mode switching according to the physical layer measurement result report — 202

FIG. 2

10

| Monitoring module 11 | Sending module 12 |

FIG. 3

20

| Receiving module 21 | Processing module 22 |

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2015033321 A

**Non-patent literature cited in the description**

• Link Level Simulation Results for Combined Cell Deployment. *3GPP TSG RAN WG1 Meeting #74*

• Mobility and Node Selection in Combined Cell Deployment for Heterogeneous Networks. *3GPP TSG RAN WG2 Meeting #83*